**Europäisches Patentamt**

**European Patent Office**

**Office européen des brevets**

(11) Veröffentlichungsnummer: **0 233 468**

**A2**

## (12) EUROPÄISCHE PATENTANMELDUNG

(21) Anmeldenummer: **87100395.0**

(22) Anmeldetag: **14.01.87**

(51) Int. Cl.⁴: **A23L 1/01** , **A47J 27/18** , **A47J 37/12**

(30) Priorität: **15.02.86 DE 3604808**

(43) Veröffentlichungstag der Anmeldung:
**26.08.87 Patentblatt 87/35**

(84) Benannte Vertragsstaaten:
**AT BE ES FR GB IT NL**

(71) Anmelder: **NORDISCHER MASCHINENBAU RUD. BAADER GMBH + CO KG**
**Geniner Strasse 249**
**D-2400 Lübeck(DE)**

(72) Erfinder: **Mette, Manfred, Dr.-Ing.**
**Ringstrasse 19 b**
**D-2000 Hamburg 73(DE)**

(54) **Verfahren zur kontinuierlichen Wärmebehandlung von Nahrungsmitteln und Vorrichtung zur Durchführung des Verfahrens.**

(57) Die Erfindung betrifft ein Verfahren und eine Vorrichtung zur kontinuierlichen Wärmebehandlung von Nahrungsmitteln. Im Unterschied zu bekannten Kochanlagen mit weitgehend homogener Temperaturführung des Wärmeträgers Wasser wird eine Mehrzonenanlage bestehend aus Vorwärm-, Koch- und Rückkühlzone vorgeschlagen, durch welche die zu behandelnden Nahrungsmittel nacheinander hindurchgeführt werden. Dabei wird der Wärmeträger der Förderrichtung entgegenströmend durch die Rückkühlzone geleitet und von dort unter Umgehung der Kochzone der Vorwärmzone zugeführt, wodurch eine Temperaturanhebung der letzteren aufgrund der an den Wärmeträger während des Rückkühlprozesses übergehenden Wärmeenergie erfolgt. Der Energiebedarf wird durch Wärmezufuhr in die Kochzone gedeckt, welche mit Hilfe von Umwälzmitteln ebenfalls im Gegenstromprinzip arbeitet.

Fig. 1

# Verfahren zur kontinuierlichen Wärmebehandlung von Nahrungsmitteln und Vorrichtung zur Durchführung des Verfahrens

Die Erfindung betrifft eine Vorrichtung zur kontinuierlichen Garung und/oder Entwässerung von Nahrungsmitteln unter Wärmebehandlung und Rückkühlung bei atmosphärischem Druck durch Kontakt mit Wasser als Wärmeträger, umfassend eine Anlage mit jeweils separater Vorwärmezone, Kochzone und Rückkühlzone, in welchen jeweils mit Kammern versehene, von Mitteln zum Fördern der Nahrungsmittel durchlaufene Wannen Verwendung finden, Wärmetauschmittel zur Übertragung der zuzuführenden Wärmeenergie auf den Wärmeträger, Mittel zum Zuführen und Abführen des Wärmeträgers und Mittel zum Fördern desselben innerhalb der Anlage.

Derartige Vorrichtungen finden Anwendung bei der industriellen Aufbereitung von Nahrungsmitteln durch Wärmebehandlung. So erfolgt ihr Einsatz beispielsweise, um alle Arten von Kochwurst, vakuumverpackte Wurst, geblisterte Wurst-Sammelpackungen, Fertiggerichte in versiegelten Kunststoffbehältern, Fischprodukte u. a. Erzeugnisse zu garen oder auch beispielsweise alle Arten von Kohl-und Knollengemüsen zu blanchieren.

Für die Wirtschaftlichkeit des Betriebes solcher Anlagen von entscheidendem Einfluß ist die Temperaturführung, der aber auch hinsichtlich der Erhaltung der Qualität des Behandlungsgutes überragende Bedeutung zukommt. Um qualitätsmindernde punktuelle Überhitzungen des Behandlungsgutes zu vermeiden ging daher das Bestreben dahin, die Temperatur nicht nur genau zu regeln, sondern auch dafür Sorge zu tragen, daß im gesamten Wasserbad gleiche Temperatur herrscht.

Diese Vorgehensweise ist in mehrfacher Hinsicht nachteilig. So ist es in den meisten Fällen bei Garprozessen erwünscht, in dem Gargut eine möglichst homogene Temperaturverteilung zu erzielen, um auf jeden Teil des Querschnitts mit der Temperatur einzuwirken, die zumindest nicht wesentlich von der Temperatur abweicht, die beispielsweise in ernährungsphysiologischer und sensorischer Hinsicht als günstig erkannt wurde. Aus insbesondere wirtschaftlichen Gründen wird jedoch üblicherweise eine demgegenüber erhöhte Temperatur gefahren mit dem Ziel, die gewünschte Kerntemperatur schneller zu erreichen, d. h. einen höheren Durchsatz aufgrund geringerer Durchlaufzeiten zu erreichen, was aber auch zur Folge hat, daß das Gargut in seinen Randzonen überhitzt wird, bevor die Kerntemperatur den gewünschten Wert erreicht hat. Neben der in diesem Zusammenhang erwähnten Qualitätsbeeinträchtigung verursacht diese Handhabung insbesondere bei empfindlichen Verpackungshüllen, beispielsweise bei Würsten mit Hüllen aus bestimmten Darmqualitäten, eine erhöhte Bruchquote bei der Wärmebehandlung aufgrund der auf diese Weise entstehenden erhöhten thermischen Beanspruchung der Hüllen. Darüberhinaus erweist sich die Energiebilanz u. a. infolge der exponentiell mit der Temperatur wachsenden Wärmeverluste als nicht günstig.

Eine in den Grundzügen diesen Erkenntnissen folgende Einrichtung ist in der FR-PS 2 569 533 offenbart. Diese Einrichtung weist einen tunnelartigen Aufbau auf und umfaßt eine Reihe von voneinander durch Türen getrennten Kammern, durch welche das in Kochbehältern befindliche Kochgut, beispielsweise Schinken, vermittels eines intermittierend betriebenen Hängeförderers hindurchgefördert wird. Dabei wird das Kochgut zunächst in einem Heißbad getaucht, dann zwecks Temperaturausgleichs zwischen Rand-und Kerntemperatur eine definierte Zeit ohne Zufuhr von Wärmeenergie belassen und anschließend unter Feuchtraumatmosphäre während des Durchlaufs durch mehrere Behandlungskammern hinsichtlich seiner Temperatur langsam angehoben bevor es durch Eintauchen in niedrig temperiertes Wasser rückgekühlt wird.

Diese bekannte Einrichtung ist als architektonischer Bestandteil einer Produktionsstätte vorgesehen.

Der Erfindung liegt die Aufgabe zugrunde, eine Kompakteinrichtung zu schaffen, welche gestattet, Nahrungsmittel einer kontinuierlichen Wärmebehandlung unter Verwendung von Wasser als Wärmeträger zu unterziehen, und dabei sicherzustellen, daß die Behandlung unter Berücksichtigung der jeweiligen ernährungsphysiologischen und sensorischen Anforderungen optimal erfolgt. Weiter soll ermöglicht werden, den Prozeß automatisch unter Ausrichtung auf eine Betriebskostenminimierung zu betreiben.

Diese Aufgabe wird erfindungsgemäß durch eine Vorrichtung der im Erfindungsbetreff genannten Art gelöst, dessen Kennzeichen darin besteht, daß die Mittel zur Zuführung des Wärmeträgers im Ausgangsbereich der Rückkühlzone und die Mittel zur Abführung des Wärmeträgers im Eingangsbereich der Vorwärmzone vorgesehen sind, daß der Eingangsbereich der Rückkühlzone mit dem Ausgangsbereich der Vorwärmzone durch eine Rohrleitung verbunden ist, in welcher als Mittel zum Fördern des Wärmeträgers eine in Abstimmung mit dessen Zuführmenge in die Rückkühlzone regelbare Förderpumpe zwischengeschaltet ist, und daß die Wärmetauschmittel in der Kochzone installiert sind.

Damit wird die dem Behandlungsgut in der Rückkühlzone entzogene und an den Wärmeträger in dieser Zone übergegangene Wärmeenergie zur Anhebung der Temperatur des Wärmeträgers in der Vorwärmzone genutzt, also ein Gegenstromeffekt erzielt, durch welchen eine Vorwärmung des Behandlungsgutes in dieser Zone ohne zusätzliche Energiezufuhr ermöglicht wird. Dabei kann eine Intensivierung des Wärmeüberganges erreicht werden dadurch, daß die Zuführung des Wärmeträgers in die Rückkühlzone und die Übergabe des aus dieser Zone abgezogenen Wärmeträgers in die Vorwärmzone jeweils über Duschen erfolgt, welche die zu behandelnden Nahrungsmittel allseitig mittels Düsen berieseln. Gleichzeitig wird so ein Waschprozeß erzielt, durch welchen etwaige, dem Behandlungsgut anhaftende Verunreinigungen entfernt werden. Um den vorteilhaften Gegenstromeffekt auch in der Kochzone einzurichten, ist vorgesehen, daß die Kochzone in ihrem Eingangsbereich eine die Wärmetauschmittel aufnehmende Nebenkammer aufweist, an welche eine Umwälzpumpe zur Entnahme des aufgeheizten Wärmeträgers und Zuführung desselben in den Ausgangsbereich der Kochzone angeschlossen ist, und daß die Nebenkammer mit dem Eingangsbereich der Kochzone über einen Überlauf verbunden ist. Damit ergibt sich in der Kochzone ein Temperaturprofil, welches die höchste Temperatur im Ausgangsbereich aufweist, so daß das Behandlungsgut langsam wachsender Temperatureinwirkung unterworfen wird. Zwecks kontinuierlicher Reinigung des Wärmeträgers kann mindestens im Ausgangsbereich der Kochzone eine Einrichtung zum Austragen von Feststoffen vorgesehen sein.

Ein kostengünstiger Aufbau ergibt sich, wenn die Mittel zum Fördern der zu behandelnden Nahrungsmittel einen angetriebenen, endlos umlaufenden Förderer umfassen, welcher sämtliche Behandlungszonen durchläuft.

Im Sinne einer weiteren Verbesserung der Wirtschaftlichkeit kann jedoch von Vorteil sein, wenn die Mittel zum Fördern jeweils synchron zueinander angetriebene und endlos umlaufende, den einzelnen Behandlungszonen separat zugeordnete und diese durchlaufende Einzelförderer umfassen. Denn mit einer solchen Anordnung wird vermieden, daß die Förderelemente jeweils das Temperaturprofil der Gesamtanlage zu durchfahren haben, d. h. durch entsprechende Zusatzenergie wie die zu behandelnden Nahrungsmittel aufgeheizt bzw. rückgekühlt werden müssen.

Für eine Steuerung des Behandlungsprozesses sind die Förderpumpe hinsichtlich ihrer Förderleistung, die Zuführung des Wärmeträgers hinsichtlich der Durchflußmenge und die Mittel zum Fördern des Behandlungsgutes hinsichtlich ihrer Geschwindigkeit regelbar. Die Steuerung geschieht dann dadurch, daß eine Erfassung der Zuflußmenge des Wärmeträgers , der zugeführten Wärmeenergie, der Eingangs-und Ausgangstemperatur des Wärmeträgers in der Kochzone und der Geschwindigkeit der Mittel zum Fördern der zu behandelnden Nahrungsmittel erfolgt, welche Daten als Prozeßdaten einem Rechner zugeführt werden, der den Behandlungsprozeß nach einem vorgegebenen Optimierungsprogramm im Hinblick auf eine Betriebskostenminimierung regelt, wobei ein vorgegebener Vergleichswert für die Temperaturdifferenz im Kochbad und/oder die durch die Geschwindigkeit der Mittel zum Fördern der zu behandelnden Nahrungsmittel repräsentierte Durchsatzleistung als Orientierungsparameter genutzt werden. Schließlich können zur Verbesserung der Startbedingungen der Anlage in jeder Behandlungszone Wärmetauschmittel vorgesehen sein, welche ermöglichen, vor der Inbetriebnahme jede Behandlungszone separat zumindest angenähert auf das Temperaturniveau zu bringen, welches sich beim Betrieb der Anlage einstellt.

Die Erfindung wird nachfolgend anhand der Zeichnung näher erläutert.
Es zeigt

Fig. 1 eine schematische Darstellung der Anlage zur Wärmebehandlung,

Fig. 2 eine Verfahrensdarstellung inform eines Verkettungsplanes,

Fig. 3 das Systemverhalten durch diagrammatische Darstellung der funktionellen Zusammenhänge zwischen dem Wasserbedarf und dem Temperaturverlauf im Wärmeträger und und in den zu behandelnden Nahrungsmitteln, dem Energie-bedarf und den relativen Betriebskosten bei Handhabung von Fischfilets als Behandlungsgut.

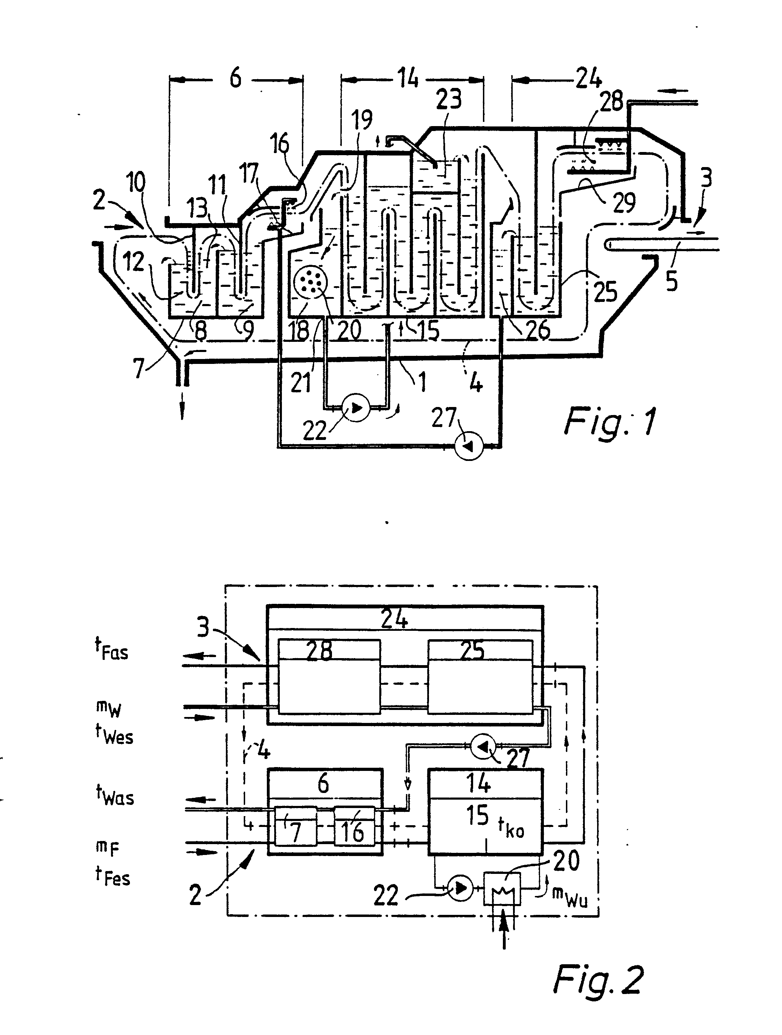

Entsprechend Fig. 1 ist die Gesamtanlage von einem geeignet gestalteten Gehäuse 1 umgeben, welches eine Eingangszone 2 für die zu behandelnden Nahrungsmittel und eine Ausgabezone 3 für die Freigabe derselben aufweist. Zur Übernahme der zu behandelnden Nahrungsmittel ist ein durch einen geeigneten Regelantrieb angetriebener, endlos umlaufender Förderer 4 vorgesehen, welcher die Gesamtanlage durchläuft und dabei jeweils durch geeignete Umlenkungen in der erforderlichen Weise geführt wird. Der Förderer 4 ist mit nicht dargestellten Aufnahmeelementen für die zu behandelnden Nahrungsmittel in Gestalt -schaukelartiger, perforierter Körbe versehen, welche in regelmäßigen Abständen an dem Förderer 4 befestigt sind. Der Ausgabezone 3 ist ein Austragsförderer 5 aus einem perforierten Förderband zugeordnet, über welchem eine nicht gezeigte Wendestelle zur Überkopfführung der Körbe und damit Übergabe des fertigbehandelten Gutes auf den Austragsförderer 5 angeordnet ist. Der Eingangszone 2 schließt sich eine Vorwärmezone 6 an, bestehend aus einer Wanne 7, welche in beispielsweise zwei Kammern 8 u. 9 unterteilt ist, deren jede wiederum durch je eine in diese eintauchende Trennwand 10 u. 11 in Teilkammern 12 u. 13 unterteilt wird, wobei diese Trennwände in einem dem Förderer 4 einen Durchlaß belassenden Abstand über dem Boden der Wanne 7 enden. Die erwähnten Umlenkungen führen dabei den Förderer 4 so, daß die Körbe in die erste Teilkammer 12 absteigen und nach Passieren des besagten Durchlasses in der zweiten Teilkammer 13 wieder aufsteigen, um in gleicher Weise die zweite Kammer 9 zu durchlaufen. Der Vorwärmzone 6 schließt sich eine Kochzone 14 an, bestehend aus einer Wanne 15 mit beispielsweise drei Kammern, die entsprechend der Wanne 7 der Vorwärmzone 6 unterteilt sind und eine Durchleitung des Förderers 4 zulassen. Im Übergangsbereich zwischen der Vorwärmzone 6 und der Kochzone 14 befindet sich eine Dusche 16, deren Düsen gegen den Förderer 4 gerichtet sind, und unterhalb derselben eine in den Ausgangsbereich der Vorwärmzone 6 geführtes Leitblech 17. Vor dem Eingangsbereich der Kochzone 14 ist eine Nebenkammer 18 eingerichtet, in welcher die erste Teilkammer der Kochzone 14 mit einem Überlauf 19 mündet, und in der sich geeignete, beispielsweise die Wärmeenergie mittels Dampf zuführende Wärmetauschmittel 20 befinden. Die Nebenkammer 18 weist einen Abfluß 21 an ihrem Boden auf, an den als Mittel zum Fördern des in dieser befindlichen Wärmeträgers eine Umwälzpumpe 22 angeschlossen ist, die in eine in den Ausgangsbereich der Kochzone 14 überlaufende Mischkammer 23 mündet. Der Kochzone 14 schließt sich eine Rückkühlzone 24 an, bestehend aus einer Wanne 25 mit beispielsweise zwei Kammern, die entsprechend der Wanne 7 der Vorwärmzone 6 unterteilt sind und eine Durchleitung des Förderers 4 zulassen. Der Rückkühlzone 24 ist eine Auffangkammer 26 vorgeschaltet, in welche die erste Teilkammer der Rückkühlzone 24 überläuft. Die Auffangkammer 26 speist eine Förderpumpe 27 , die die Dusche 16 im Ausgangsbereich der Vorwärmzone 6 betreibt. Im Ausgangsbereich der Rückkühlzone 24 befindet sich in Nachbarschaft zu der Ausgabezone eine Dusche 28 , deren Düsen gegen den Förderer 4 gerichtet sind, und unterhalb derselben eine in den Ausgangsbereich der Rückkühlzone 24 geführtes Leitblech 29.

Die Wirkungsweise der Vorrichtung und die verfahrenstechnischen Zusammenhänge werden nachfolgend beschrieben: Die Fig. 2 zeigt in symbolhafter Darstellung die vorrichtungsmäßig beschriebene Verkettung innerhalb der Gesamtanlage. Wie hier deutlicher zu erkennen ist, wird zur Inbetriebnahme Frischwasser $m_W$ oder geeignet aufbereitetes Wasser der Rückkühlzone 24 über die Dusche 28 zugeführt, worauf es dem Ausgangsbereich der Wanne 25 zufließt. Von dort wird es unter Umgehung der Kochzone 14 über die Dusche 16 in den Ausgangsbereich der Wanne 7 der Vorwärmezone 6 zugeleitet, in deren Eingangsbereich es überlaufen und als Abwasser abfließen kann. Die innerhalb der Kochzone 14 befindliche Wanne 15 wird separat mit dem Wärmeträger gefüllt und dieser mit Hilfe der Umwälzpumpe 22 umgewälzt, so daß die über die Wärmetauschmittel 20 zugeführte Wärmeenergie homogen verteilt wird. Wie erkennbar ist, ergibt sich so eine Strömung des Wärmeträgers Wasser, die von der Ausgabezone 3 zur Eingangszone 2 der Gesamtanlage gerichtet ist und damit der Förderrichtung des Behandlungsgutes entgegenläuft. Um die Inbetriebnahme unter Bedingungen zu ermöglichen, die zumindest annähernd den sich im Betrieb einstellenden Zuständen entsprechen, kann auch in der Vorwärmezone 6 und der Rückkühlzone 24 für eine demgemäße Anhebung der Temperatur Sorge getragen werden. Während des Durchlaufes der zu behandelnden Nahrungsmittel wird dieses zunächst der Temperatur der Vorwärmzone 6 ausgesetzt und tritt dann entsprechend vorgewärmt in die eigentliche Kochzone 14 ein. Für die weitere Handhabung wird es anschließend beim Durchlauf durch die Rückkühlzone 24 gekühlt. Dabei geht ein Teil der freiwerdenden Wärmeenergie an den in dieser Zone befindlichen Wärmeträger über, so daß dessen Wärmeinhalt aufgrund der Überleitung in die Vorwärmezone 6 für die Vorwärmung der zu behandelnden Nahrungsmittel genutzt werden kann.

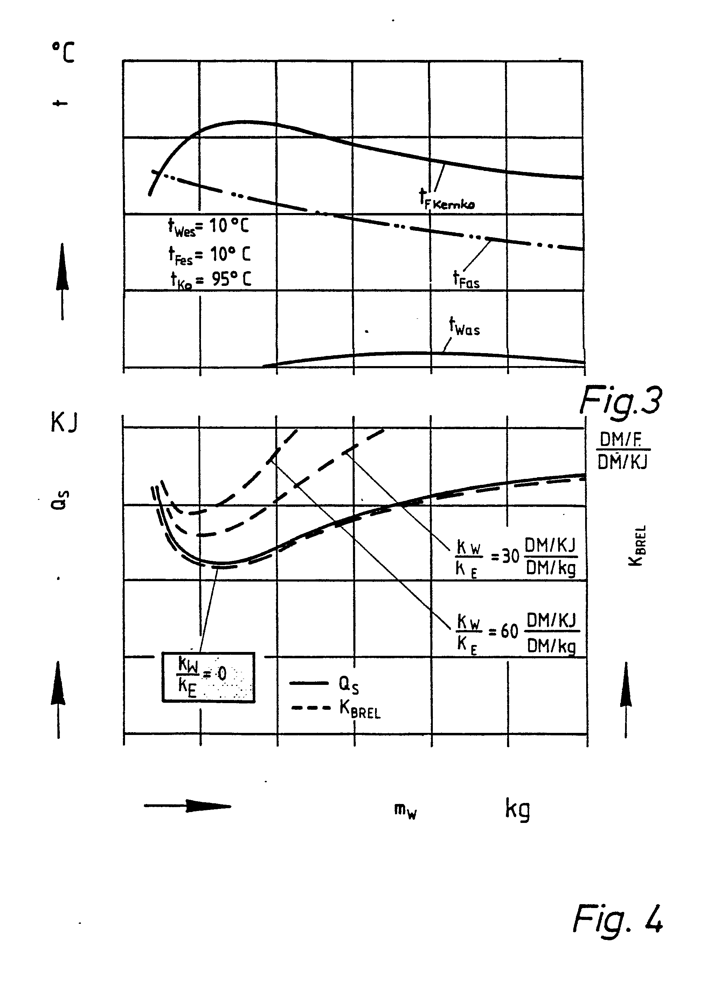

Durch systemanalytische Untersuchungen mittels rechnerischer Simulation des Systemverhaltens läßt sich nachweisen, daß durch Änderung des Umwälzstromes $m_{Wu}$ in der Kochzone 14 und der in der Ausgabezone 3 zugegebenen Frischwassermenge $m_W$ bei sonst festen Systemparametern der zeitliche Verlauf des Temperaturprofils in den behandelten Nahrungsmitteln beeinflußbar ist und damit vorgegebenen technologischen oder ernährungsphysiologischen Anforderungen angepaßt werden kann. Infolge der Nutzung des sich in der Rückkühlzone 24 aufheizenden Wassers zur Temperaturanhebung der zu behandelnden Nahrungsmittel in der Vorwärmzone 6 vermindert sich dabei gleichzeitig der Energieaufwand für den Kochvorgang im Vergleich zu Systemen ohne Vorwärmung und Rückkühlung. Unter anderem dieser Sachverhalt ist anhand der in Fig. 3 wiedergegebenen Diagramme verfolgbar, welche erstellt wurden unter Zugrundelegung von Fischfilets als Behandlungsgut. Die dabei benutzten Bezeichnungen und Indices haben folgende Bedeutung:

Bezeichnungen: m Masse
Q Energie
t Temperatur
K Kosten
Indices : F Fischfilets
W Wasser
a Ausgang
e Eingang
s System
ko kochen
w vorwärmen

Das Q-m-Diagramm zeigt für den inform von Wärme zuzuführenden Energiebedarf $Q_s$ einen von der durchfließenden Wassermenge $m_W$ abhängigen Verlauf, welcher bei wachsender Wassermenge eine zunächst fallende, dann allmählich wieder steigende Tendenz aufweist. Entsprechend der unterschiedlichen örtlichen Gegebenheiten hinsichtlich des Kostenverhältnisses aus Wasserkosten $K_W$ und Energiekosten $K_E$ ergibt sich daraus ein relativer Betriebskostenbedarf $K_{Brel}$ entsprechend der gestrichelten Kurvenschar, wobei die oberste dieser Kurven einem hohen Verhältniswert zwischen den jeweiligen Wasserkosten $K_W$ und Energiekosten $K_E$ zuzuordnen ist, während die unterste der Kurven einem Verhältniswert entspricht, der sich bei $K_W = 0$ ergibt. Die damit in der beschriebenen Vorrichtung und in den behandelten Fischfilets erreichbaren Temperaturverläufe sind in dem t-m -Diagramm dargestellt, in welchem die Kern temperatur $t_{Fkernko}$ in den Filets gemäß dem entsprechend bezeichneten Kurvenzug verläuft und die mittlere Ausgangstemperatur der Filets dem mit $t_{Fas}$ bezeichneten Kurvenzug. Die Temperatur des Abwassers nimmt dabei den Verlauf des mit $t_{Was}$ bezeichneten Kurvenzuges an. Die dargestellten Verhältnisse stellen sich ein bei Vorgabe folgender Grundparameter:

Verweilzeit in der Vorwärmszone 6 600 s
Verweilzeit in der Kochzone 14 1500 s
Verweilzeit in der Rückkühlzone 24 600 s
(gesamte Behandlungszeit also 2700 s)
in der Kochzone 14 umgewälzte Wassermenge 2,5 kg pro Filet
bei einer mittleren Filetdicke von 0,045 m
Frischwassertemperatur 10 °C
Eingangstemperatur der Filets 10 °C
Temperatur des dem Ausgangsbereich der Kochzone 14 zugeführten Wassers 95 °C

Wie erkennbar ergibt sich für den Betrieb der erfindungsgemäßen Vorrichtung, daß unter diesen Vorgaben bei einer bestimmten Frischwasserzufuhr mit einem Minimum an Energiebedarf $Q_s$ die zumindest angenähert höchstmögliche Temperatur in den Filets erreichbar ist, wobei auch deutlich wird, daß damit eine qualitätsfördernde Minderung des maximal auftretenden Temperaturgefälles zwischen Oberfläche und Kern der Filets verbunden ist.

Es ist danach möglich, die beschriebene Vorrichtung zum Beispiel unter energetischen Optimalbedingungen zu betreiben, wenn lediglich eine Überwachung des Zuflusses der Frischwassermenge erfolgt.

Liste der benutzten Bezeichnungen

1 Gehäuse
2 Eingangszone
3 Ausgabezone
4 Förderer
5 Austragsförderer
6 Vorwärmezone
7 Wanne
8 Kammer
9 Kammer
10 Trennwand
11 Trennwand
12 Teilkammer
13 Teilkammer
14 Kochzone
15 Wanne
16 Dusche
17 Leitblech
18 Nebenkammer
19 Überlauf
20 Wärmetauschmittel
21 Abfluß
22 Umwälzpumpe
23 Mischkammer
24 Rückkühlzone
25 Wanne
26 Auffangkammer
27 Förderpumpe
28 Dusche
29 Leitblech

**Ansprüche**

1. Vorrichtung zur kontinuierlichen Garung und/oder Entwässerung von Nahrungsmitteln unter Wärmebehandlung und Rückkühlung bei atmosphärischem Druck durch Kontakt mit Wasser als Wärmeträger, umfassend
-eine Anlage mit jeweils separater Vorwärmezone, Kochzone und Rückkühlzone, in welchen jeweils mit Kammern versehene, von Mitteln zum Fördern der Nahrungsmittel durchlaufene Wannen Verwendung finden,
-Wärmetauschmittel zur Übertragung der zuzuführenden Wärmeengergie auf den Wärmeträger,
-Mittel zum Zuführen und Abführen des Wärmeträgers und
-Mittel zum Fördern desselben innerhalb der Anlage, **gekennzeichnet dadurch,** daß die Mittel zur Zuführung des Wärmeträgers im Ausgangsbereich der Rückkühlzone (24) und die Mittel zur Abführung des Wärmeträgers im Eingangsbereich der Vorwärmzone (6) vorgesehen sind, daß der Eingangsbereich der Rückkühlzone (24) mit dem Ausgangsbereich der Vorwärmzone (6) durch eine Rohrleitung verbunden ist, in welche als Mittel zum Fördern des Wärmeträgers eine in Abstimmung mit dessen Zuführmenge in die Rückkühlzone (24) regelbare Förderpumpe (27) zwischengeschaltet ist, und daß die Wärmetauschmittel (20) in der Kochzone (14) installiert sind.

2. Vorrichtung nach Anspruch 1 , **gekennzeichnet dadurch,** daß die Zuführung des Wärmeträgers in die Rückkühlzone (24) und die Übergabe des aus dieser Zone abgezogenen Wärmeträgers in die Vorwärmzone (6) jeweils über Duschen (28 u. 16) erfolgt, welche die zu behandelnden Nahrungsmittel mittels Düsen allseitig berieseln.

3. Vorrichtung nach Anspruch 1 , **gekennzeichnet dadurch,** daß die Kochzone (14) in ihrem Eingangsbereich eine die Wärmetauschmittel - (20) aufnehmende Nebenkammer (18) aufweist, an welche eine Umwälzpumpe (22) zur Entnahme des aufgeheizten Wärmeträgers und Zuführung desselben in den Ausgangsbereich der Kochzone (14) angeschlossen ist, und daß die Nebenkammer (18) mit dem Eingangsbereich der Kochzone (14) über einen Überlauf (19) verbunden ist.

4. Vorrichtung nach einem der vorhergehenden Ansprüche, **gekennzeichnet dadurch,** daß mindestens im Ausgangsbereich der Kochzone (14) eine Einrichtung zum Austragen von Feststoffen vorgesehen ist.

5. Vorrichtung nach einem der vorhergehenden Ansprüche, **gekennzeichnet dadurch,** daß die Mittel zum Fördern der zu behandelnden Nahrungsmittel einen angetriebenen, endlos umlaufenden Förderer (4) umfassen, welcher sämtliche Behandlungszonen durchläuft.

6. Vorrichtung nach einem der Ansprüche 1 bis 4 , **gekennzeichnet dadurch,** daß die Mittel zum Fördern jeweils synchron zueinander angetriebene und endlos umlaufende, den einzelnen Behandlungszonen separat zugeordnete und diese durchlaufende Einzelförderer umfassen.

7. Vorrichtung nach einem der vorhergehenden Ansprüche, **gekennzeichnet dadurch,** daß die Förderpumpe (27) hinsichtlich ihrer Förderleistung, die Zuführung des Wärmeträgers hinsichtlich der Durchflußmenge und die Mittel zum Fördern der zu behandelnden Nahrungsmittel hinsichtlich ihrer Geschwindigkeit regelbar sind.

8. Vorrichtung nach einem der vorhergehenden Ansprüche, **gekennzeichnet dadurch,** daß eine Erfassung der Zuflußmenge des Wärmeträgers, der zugeführten Wärmeengergie, der Eingangs-und Ausgangstemperatur des Wärmeträgers in der Kochzone (14) und der Geschwindigkeit der Mittel zum Fördern der zu behandelnden Nahrungsmittel erfolgt, welche Daten als Prozeßdaten einem Rechner zugeführt werden, der den Behandlungsprozeß nach einem vorgegebenen Optimierungsprogramm im Hinblick auf eine Betriebskostenminimierung regelt, wobei ein vorgegebener Vergleichswert für die Temperaturdifferenz im Kochbad und/oder die durch die Geschwindigkeit der Mittel zum Fördern der zu behandelnden Nahrungsmittel repräsentierte Durchsatzleistung als Orientierungsparameter genutzt werden.

9. Vorrichtung nach Anspruch 1, **gekennzeichnet dadurch,** daß in jeder Behandlungszone Wärmetauschmittel vorgesehen sind.

Fig. 1

Fig. 2

Fig.3

Fig. 4